Europäisches Patentamt

European Patent Office

Office européen des brevets

(11) Veröffentlichungsnummer: **0 385 301**
**A2**

## (12) EUROPÄISCHE PATENTANMELDUNG

(21) Anmeldenummer: **90103555.0**

(22) Anmeldetag: **23.02.90**

(51) Int. Cl.⁵: **B05C 5/02**

(30) Priorität: **25.02.89 DE 3905914**

(43) Veröffentlichungstag der Anmeldung:
**05.09.90 Patentblatt 90/36**

(84) Benannte Vertragsstaaten:
**DE FR GB IT**

(71) Anmelder: **ELASTOGRAN POLYURETHANE GMBH**
**Landwehrweg**
**D-2844 Lemförde(DE)**

(72) Erfinder: **Taubenmann, Peter**
**Strindbergstrasse 1**
**D-8000 München(DE)**

(74) Vertreter: **Springer, Hans Jörg, Dr. et al**
**BASF Aktiengesellschaft Patentabteilung**
**Carl-Bosch-Strasse 38**
**D-6700 Ludwigshafen(DE)**

(54) **Verteilerdüse für flüssige Kunststoffgemische, insbesondere Polyurethan.**

(57) Die Verteilerdüse zum Anbau an die Austrittsöffnung eines Mischkopfes 1 für flüssige Kunststoffgemische, insbesondere Polyurethan, dient der kontinuierlichen Flächenbeschichtung, vorzugsweise auf einem kontinuierlich bewegten Träger, wobei der Innenraum der Verteilerdüse durch zwei Seitenwände begrenzt ist. Dieser Innenraum ist in einfacher Weise als im wesentlichen glatter und gerader Spalte 9 ausgebildet, der an seinen Schmalseiten offen ist, wobei die Kontur der Seitenwände 7, 8 so ausgebildet ist, daß das flüssige Kunststoffgemisch möglichst gleichmäßig oder nach einem vorherbestimmten Muster in der Auftragsebene verteilt wird. Die Verteilerdüse mit ihrem glatten, und keine Einbauten aufweisenden Spalt hat eine hohe Standzeit, da sie nicht dazu neigt, zuzuwachsen, und sie erzeugt in überraschender Weise einen sehr breiten Fächer für das austretende Kunststoffgemisch, so daß in den allermeisten Anwendungsfällen die Verteilerdüse nicht mehr über die Trägerbahn hin- und herbewegt werden muß, um für eine Beschichtung über die gesamte Breite der Trägerbahn zu sorgen.

FIG.2

EP 0 385 301 A2

Die Erfindung betrifft eine Verteilerdüse nach dem Oberbegriff des Patentanspruches 1.

Eine derartige Verteilerdüse - dort als Breitschlitzdüse bezeichnet - ist aus der DE-PS 27 26 360 bekannt. Diese bekannte Breitschlitzdüse ist an dem Austritt einer Mischkammer befestigt und dient der Erzeugung eines ruhigen Austragsfächers. Zu diesem Zweck ist im Innenraum der Düse ein besonders gestalteter Verdrängungskörper angeordnet, der beruhigend und gestaltend auf den Gemischstrom einwirkt. Die Breite des erzeugten Strahles ist durch die Breite der Breitschlitzdüse festgelegt und nicht nennenswert größer als diese. In der Praxis liegt sie im Bereich von 200 mm. Die komplizierte Gestaltung des Innenraumes durch die Seitenwände der Breitschlitzdüse und durch den Verdrängungskörper hat jedoch nachteilige Einwirkung auf die Standzeit, d.h. die Düse neigt dazu, zuzuwachsen, so daß der Betrieb häufig unterbrochen werden muß, um die Breitschlitzdüse zu reinigen. Dieses ist bei der Beschichtung kontinuierlich bewegter, sehr langer Trägerbahnen, z.B. abgewickelter Bleche, insbesondere dann von Nachteil, wenn die Beschichtung mit Gemisch während des Abwickelvorganges eines Bleches unterbrochen werden muß. Auch hat die beschränkte Breite des Austrittsfächers zur Folge, daß die Breitschlitzdüse in den meisten Anwendungsfällen über den fortlaufend bewegten Träger hin- und herbewegt werden muß, um die gesamte Breite der Trägerbahn zu beschichten.

Der Erfindung liegt die Aufgabe zugrunde, eine Verteilerdüse der eingangs genannten Art zu schaffen, die eine sehr viel größere Auftragsbreite aufweist und die gleichzeitig eine höhere Standzeit hat.

Diese Aufgabe wird grundsätzlich durch das Kennzeichen des Patentanspruches 1 gelöst.

Die erfindungsgemäße Verteilerdüse ist überraschend einfach aufgebaut. Sie besteht aus zwei im wesentlichen parallelen Seitenwänden, die einen relativ schmalen Spalt begrenzen, der an beiden Seiten offen ist. Die Kontur der Seitenwände ist so gestaltet, daß ein breiter und gleichmäßiger Fächer des ausströmenden Gemisches entsteht. Die Gestaltung der Kontur erfolgt empirisch oder auch rechnerisch durch Erfassung der entsprechenden Größen so, daß der Strömungswiderstand für den Gemischstrom senkrecht nach unten größer ist und zur Seite geringer, so daß ein gleichmäßiger und sehr breiter Fächer entsteht. Der erzeugte Fächer ist im Verhältnis zu seiner Breite sehr dünn (die Dicke des Fächers entspricht ungefähr der Weite des Spaltes). Dennoch ist die Strömung in dem gesamten Fächer sehr ruhig und die Fächeroberfläche sehr glatt. Durch die Gestaltung der Kontur kann Einfluß auf die Menge des Kunststoffgemisches in der Auftragsebene genommen werden. In Versuchen wurden verschieden gestaltete, stetig verlaufende, mehr oder weniger stark gekrümmte, Konturen erfolgreich erprobt. Diese waren ungefähr parabel- oder hyperbel-förmig, oben am Einlauf abgeschnitten, oder sie waren ellipsen- oder halbkreisförmig. Ungefähr sah die Form unter Berücksichtigung des abgeschnittenen Teils am Einlauf wie ein Hufeisen aus.

Normalerweise ist die Kontur glatt, so daß eine gleichmäßige Verteilung des Kunststoffgemisches in der Auftragsebene gewährleistet ist. Wenn in der Auftragsebene aber bestimmte Bereiche vorhanden sind, die mit einem höheren Anteil an Kunststoffgemisch versorgt werden sollen (z.B. Sicken in dem bewegten Träger), dann können in der Kontur Kerben oder dergl. vorgesehen sein, die für eine entsprechende Erhöhung der Gemischmenge in ganz bestimmten Abschnitten sorgen.

Die Kontur ist praktisch so gestaltet, daß der Druckverlust über dem Spalt im wesentlichen konstant ist, d.h. die Druckdifferenz zwischen Eintrittsdruck und Austrittsdruck bzw. Umgebungsdruck ist konstant. Die strömende Teilmenge an jedem Punkt der Kontur wird bestimmt durch die Länge des Strompfades vom Eintritt bis zum Austrittspunkt. Die Richtung der Strömung des Gemisches an der Kontur ist im wesentlichen senkrecht zu dieser.

Der Spalt weist keinen Verdrängungskörper oder keine anderen Schikanen auf. Er ist praktisch glatt und wird durch zwei im wesentlichen ebene Flächen gebildet. Die Beeinflussung der Strömung zur Bildung des Fächers erfolgt im wesentlichen durch die Kontur der Seitenwände und in einem gewissen Umfang durch den Einlaufbereich des Spaltes, der als Einlaufkalotte oder in ähnlicher Weise gestaltet sein kann. In Strömungsrichtung anschließend an die Einlaufkalotte kann auch noch eine Vertiefung vorgesehen sein, um die Verteilung des Gemisches in der zu beschichtenden Auftragsebene so zu beeinflussen, daß es nicht außen am Rand der Auftragebene zu einer Gemischanhäufung kommt.

Im Unterschied zu der bekannten Breitschlitzdüse wird die Form und Art des Fächers aus dem flüssigen Kunststoffgemisch nicht durch den Innenraum der Düse, durch die Ausformung der angrenzenden Seitenwände und insbesondere nicht durch einen Verdrängungskörper bestimmt, sondern durch die äußere Gestaltung, d.h. die Kontur am Austritt aus dem durch die Seitenwände definierten Spalt. Da sich in dem Spalt keine Schikanen oder ähnlich kompliziert gestaltete Formkörper befinden, weist die Verteilerdüse eine lange Standzeit auf, d.h. sie kann über einen langen Zeitraum betrieben werden, ohne daß die Gefahr besteht, daß der Spalt zuwächst.

Besonders überraschend ist die erzeugte Breite des Fächers. Bei Versuchen war es ohne Schwierigkeiten möglich, Breiten von einem Meter bei vollständig ruhiger und gleichmäßiger Strömung und Oberfläche des Fächers zu erzeugen. Über die gesamte Breite und Höhe des Fächers war die Strömung gleichmäßig und der Fächer war ungefähr so dick wie die Weite des Spaltes. Durch die große Fächerbreite ist es in den meisten Anwendungsfällen nicht mehr erforderlich, die Verteilerdüse hin- und herzubewegen, um zu einer gewünschten Verteilerbreite zu kommen. Die Verteilerdüse selbst ermöglicht es, Kunststoffgemisch in entsprechender Breite auf einen Träger zu bringen, wobei die Breite auch während des Betriebes durch einzelne Parameter, wie Geschwindigkeit und Menge des Gemisches und insbesondere die Spaltweite, beeinflußt werden kann.

Dieses ist z.B. vorteilhaft, wenn bei Inbetriebnahme, d.h. beim Anfahren oder beim Abbremsen einer mit der Verteilerdüse betriebenen Anlage, mit der sich ändernden Geschwindigkeit des zu beschichtenden Trägers auch die Austragsleistung des auszutragenden Gemisches entsprechend verändert wird, wobei aber die Austragsbreite konstant bleiben soll. Dies wird erreicht durch eine entsprechende Veränderung der Spaltweite. Diese Weitenänderung kann auch automatisch während des Betriebes erfolgen, z.B. durch einen Stellmotor, der in Abhängigkeit der gemessenen Austragsbreite betätigt wird, um die erforderliche Spaltweite für eine gewünschte Austragsbreite einzustellen bzw. zu regeln.

Im folgenden wird die Erfindung unter Hinweis auf die Zeichnung anhand eines Ausführungsbeispieles näher erläutert.

Es zeigt:

Fig. 1 eine teilweise geschnittene Seitenansicht einer Ausführungsform nach der Erfindung;

Fig. 2 einen senkrechten Schnitt durch die Ausführungsform der Fig. 1;

Fig. 3 einen Schnitt durch eine andere Ausführungsform eines Nachmischelementes;

Fig. 4 eine Draufsicht auf das Nachmischelement der Fig. 3;

Fig. 5 eine Draufsicht auf das Nachmischelement der Ausführungsform nach Fig. 2; und

Fig. 6 eine Draufsicht auf eine Seitenwand einer abgewandelten Ausführungsform.

Die in der Zeichnung dargestellte Verteilerdüse ist an einen Mischkopf 1 angebaut. Dieser Mischkopf 1 weist eine Mischkammer 5 und zwei Düseneinbauräume 2 auf, in denen die eigentlichen Einspritzdüsen für die Komponenten befestigt werden. Die Einspritzöffnungen sind mit 3 bezeichnet.

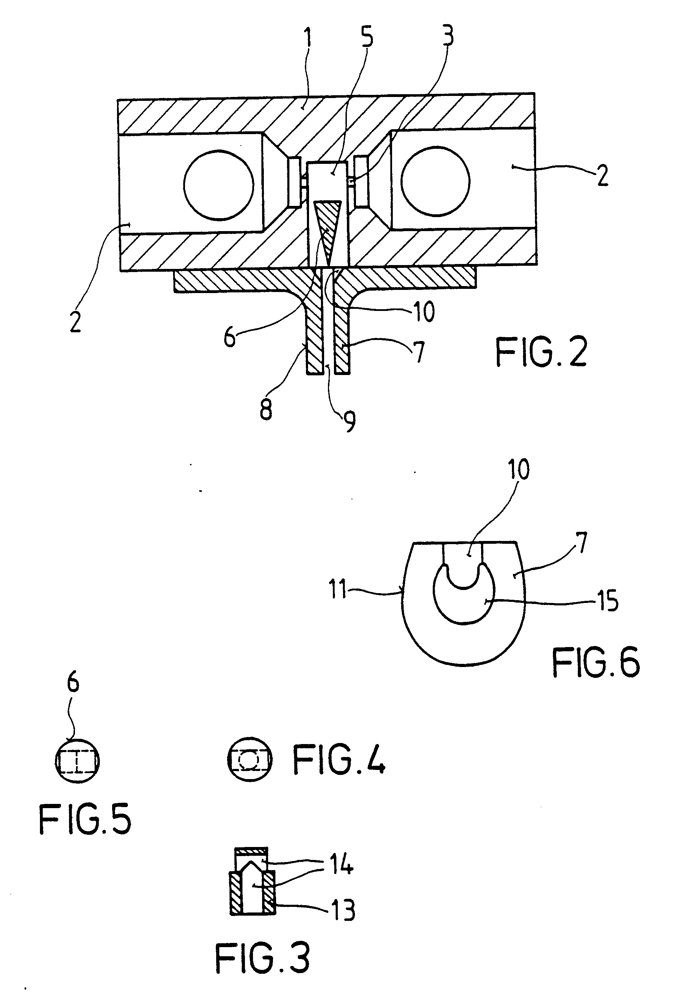

In dem Austrittskanal 4 der Mischkammer 5 ist ein Nachmischelement 6 angeordnet, das gemäß den Fig. 2 und 5 so gestaltet ist, daß gleichzeitig eine kegel- oder keilförmige Form mit einer Spitze in Richtung auf den Austritt entsteht.

In den Fig. 3 und 4 ist eine andere Ausführungsform eines Nachmischelementes 13 mit Bohrungen 14 dargestellt.

Die eigentliche Verteilerdüse wird durch zwei Seitenwände 7 und 8 gebildet, die einen schmalen Spalt 9 begrenzen, der nach unten und zur Seite offen ist. Der Spalt ist vollständig glatt und eben und weist keine Einbauten oder andere Schikanen auf. Bei dieser Ausführungsform sind die beiden Flächen, die den Spalt begrenzen, vollständig parallel, obwohl auch geringe Abweichungen hiervon denkbar sind. Am Einlauf, d.h. am Übergang vom Austrittskanal 4 zum Spalt 9 befindet sich eine Einlaufkalotte 10, deren Form einen gewissen Einfluß auf die Ausbildung des aus dem Spalt 9 austretenden Fächers hat.

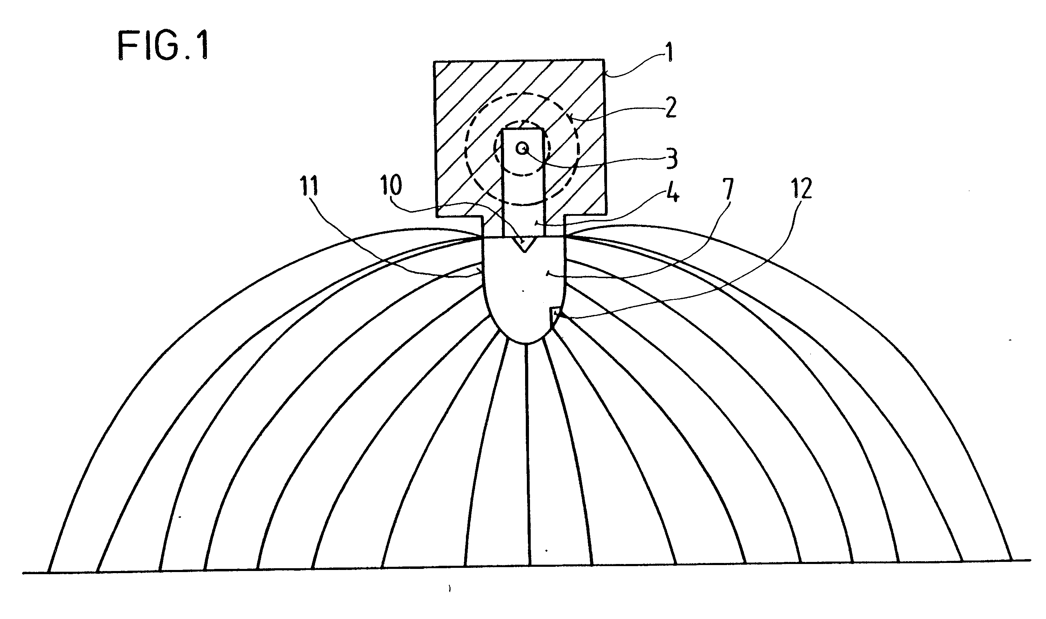

Wesentlich wird die Form und Breite des Fächers aber durch die Kontur 11 der Seitenwände 7 und 8 beeinflußt. Fig. 1 zeigt deutlich, wie die Kontur 11 im Prinzip ausgebildet ist, um einen breiten Fächer des Gemischstromes zu erzielen, bei der die Verteilung des Gemisches in der Auftragsebene eines Trägers gleichmäßig erfolgt. Wenn man davon ausgeht, daß die Mischkammer und die Verteilerdüse in den Fig. 1 und 2 ungefähr im Maßstab 1 : 1 dargestellt sind, und mit dieser Vorrichtung eine Breite im Bereich von einem Meter beschichtet werden kann, so wird deutlich, wie groß die Beschichtungsbreite im Verhältnis zur Breite des Spaltes ist. In Fig. 1 ist aus darstellungstechnischen Gründen ein Fächer sehr geringer Breite gezeigt. Durch Ausbildung von Vertiefungen oder Kerben 12 (in Fig. 1 angedeutet), ist es möglich, in bestimmten Bereichen für eine größere Gemischmenge in der Auftragsebene zu sorgen, beispielsweise um Vertiefungen oder Sicken in der dort bewegten Trägerbahn zu füllen.

In Fig. 6 ist eine etwas andere Ausführungsform einer Seitenwand 7, gesehen aus Richtung des Spaltes, dargestellt. Die Form ist ungefähr hufeisenförmig. Die Einlaufkalotte 10 ist nicht, wie in Fig. 1 dargestellt, kegelförmig, sondern ungefähr der Form der Kontur 11 angepaßt. Im Anschluß an die Einlaufkalotte 10 ist noch eine Vertiefung 15 vorgesehen, durch die die Strömung beeinflußt werden kann. Durch diese Vertiefung 15 kann erreicht werden, daß bei einigen Anwendungsfällen eine Häufung des Gemischstromes links und rechts ganz außen in der zu beschichtenden Auftragsebene vermieden wird. Die Strömung wird durch diese Vertiefung noch gleichmäßiger in der Auftragsebene verteilt.

**Ansprüche**

1. Verteilerdüse für flüssige Kunststoffgemische, insbesondere Polyurethan, zum Anbau an die Austrittsöffnung eines Mischkopfes, zur kontinuierlichen Flächenbeschichtung, vorzugsweise auf einem fortlaufend bewegten Träger, wobei der Innenraum durch zwei Seitenwände begrenzt ist, dadurch gekennzeichnet, daß der Innenraum als im wesentlichen glatter und gerader Spalt (9) ausgebildet ist, der an seinen Schmalseiten offen ist, und daß die Kontur (11) der Seitenwände (7, 8) so ausgebildet ist, daß das flüssige Kunststoffgemisch im wesentlichen gleichmäßig in der zu beschichtenden Auftragsebene verteilt ist.

2. Verteilerdüse nach Anspruch 1, dadurch gekennzeichnet, daß das flüssige Kunststoffgemisch nach einem im voraus festgelegten Schema oder Muster in der zu beschichtenden Auftragsebene verteilt ist.

3. Verteilerdüse nach Anspruch 1 oder 2, dadurch gekennzeichnet, daß die Kontur (11) so gestaltet ist, daß der Druckverlust über dem Spalt (9) im wesentlichen konstant ist, und daß die Strömungsrichtung (Strombahnen) im wesentlichen senkrecht zur Kontur (11) der Seitenwände (7, 8) verläuft.

4. Verteilerdüse nach Anspruch 1, 2 oder 3, dadurch gekennzeichnet, daß am Eintritt in den Spalt (9) eine Einlaufkalotte (10) ausgebildet ist.

5. Verteilerdüse nach den Ansprüchen 1 bis 4, dadurch gekennzeichnet, daß in Strömungsrichtung zwischen Einlaufkalotte (10) und Spalt (9) eine Vertiefung (15) in den Seitenwänden (7, 8) vorgesehen ist.

6. Verteilerdüse nach einem oder mehreren der vorstehenden Ansprüche, dadurch gekennzeichnet, daß die Weite des Spaltes (9) durch Veränderung des Abstandes der Seitenwände (7, 8) verstellbar ist.

7. Verteilerdüse nach Anspruch 6, dadurch gekennzeichnet, daß der Abstand der Seitenwände (7, 8) während des Betriebes verstellbar ist.

8. Verteilerdüse nach einem oder mehreren der vorstehenden Ansprüche, dadurch gekennzeichnet, daß der Spalt (9) schmäler ist als der Durchmesser oder die Breite der Mischkammer (5), an der sie angebaut ist.

FIG.1

FIG.2

FIG.6

FIG.4

FIG.5

FIG.3